# FASCICULE DE BREVET EUROPEEN

(11) **EP 3 894 284 B1**
(45) Date de publication et mention de la délivrance du brevet: **21.02.2024**
(21) Numéro de dépôt: 19842592.8
(22) Date de dépôt: 02.12.2019
(51) Int. Cl.: B60R 25/24

(54) **PROCEDE DE COMMANDE D'UN ETAT DE FONCTIONNEMENT D'UN VEHICULE**
VERFAHREN ZUR STEUERUNG EINES BETRIEBSZUSTANDES EINES FAHRZEUGS
METHOD FOR CONTROLLING AN OPERATING STATE OF A VEHICLE

(30) Priorité: 12.12.2018 FR 1872731
(43) Date de publication de la demande: 20.10.2021
(73) Titulaire: Stellantis Auto SAS, 78300 Poissy (FR)
(72) Inventeur: ANTONIUCCI, Lionel, 92000 NANTERRE (FR); LANOUE, Stephane, 77580 COULOMMES (FR)
(86) Numéro de dépôt international: PCT/FR2019/052880
(87) Numéro de publication internationale: WO 2020/120871

(56) Documents cités:
- DE-A1-102014 219 502
- US-A1- 2004 135 670
- US-A1- 2009 064 741
- US-A1- 2010 071 427
- US-A1- 2012 209 454

## Description

### Domaine technique de l'invention

Le domaine technique de l'invention concerne le déverrouillage d'un véhicule, notamment automobile. En ce sens, l'invention est relative à un procédé de commande d'un état de fonctionnement d'un véhicule.

### Etat de la technique

De manière classique, un dispositif d'immobilisation, aussi appelé « immobiliseur », pour véhicule automobile comporte les moyens nécessaires pour empêcher le démarrage du véhicule lorsqu'un dispositif d'identification mains-libres du véhicule n'est pas présent dans l'habitacle du véhicule.

Dans le fonctionnement classique du dispositif d'immobilisation, par exemple un anti-démarrage codé, un nombre aléatoire est généré par un calculateur tel qu'un calculateur de contrôle d'un moteur thermique. Ce nombre aléatoire est envoyé par un bus système série (par exemple de type CAN) à un boîtier de servitude intelligent. Si le dispositif d'identification mains-libres est authentifié par le boîtier de servitude intelligent ayant reçu le nombre aléatoire, ce dernier répond au calculateur de contrôle du moteur thermique en lui envoyant une clé chiffrée permettant le déverrouillage du dispositif d'immobilisation. Tant qu'aucun dispositif d'identification n'est authentifié par le boîtier de servitude intelligent, le boîtier de servitude intelligent ne répond pas au calculateur de contrôle du moteur thermique qui, dans ce cas, garde l'état verrouillé du dispositif d'immobilisation, ce qui se traduit par une absence de consigne aux bobines d'allumage (moteur essence) et/ou une absence de consigne aux injecteurs (moteurs essence et diesel) issues de ce calculateur de contrôle du moteur thermique. Ce fonctionnement décrit pour le calculateur de contrôle du moteur thermique peut aussi s'appliquer, le cas échéant, à un calculateur de contrôle d'un moteur d'une machine électrique avant du véhicule, à un calculateur de contrôle d'un moteur d'une machine électrique arrière du véhicule si le véhicule automobile comporte de tels équipements : dès lors, l'état verrouillé se traduit par une absence de pilotage en courant/tension du moteur concerné. Ce fonctionnement décrit pour le calculateur de contrôle du moteur thermique et pour les calculateurs de contrôle du moteur de la machine électrique avant et/ou arrière s'applique au contrôle de la boîte de vitesse si le véhicule est équipé d'une boîte de vitesse automatique hydraulique par exemple à huit rapports (on parlera alors de la fonction ACRC (signifiant anti-changement de rapport codé) qui se substitue à l'anti-démarrage codé). Dans ce cas, l'état verrouillé se traduit par une impossibilité de quitter la position « park » (position de parking) de la boîte de vitesse, bloquant ainsi le déplacement du véhicule. A noter, que lorsque le véhicule comporte plusieurs calculateurs choisis parmi le calculateur de contrôle du moteur thermique, le calculateur de contrôle du moteur de la machine avant, le calculateur de contrôle du moteur de la machine arrière, le calculateur de contrôle de la boîte de vitesse, il suffit qu'un de ces calculateurs du véhicule reste dans l'état verrouillé pour que l'ensemble de la chaîne de traction du véhicule ne soit pas opérationnelle. En complément, en cas de véhicule à moteur thermique, tant qu'aucun dispositif d'identification n'est authentifié par le boîtier de servitude intelligent, le pilotage du démarreur permettant la mise en fonctionnement du moteur thermique est impossible. Un tel fonctionnement impose que le dispositif d'identification soit présent dans l'habitacle du véhicule pour qu'il puisse être authentifié par le boîtier de servitude intelligent : ceci permet de garantir qu'un voleur, non équipé du dispositif d'identification du véhicule (par exemple sa clé), ne peut pas mettre en action le véhicule pour le voler.

Un inconvénient du principe actuel de fonctionnement du dispositif d'immobilisation est que ce dernier est incompatible avec la mise en action du véhicule via un dispositif de commande à distance.

Il est connu du document US 2004/135670 ou DE102013202958 une solution pour restreindre le fonctionnement d'un véhicule pour passer ce véhicule d'un mode totalement opérationnel pour un conducteur principal à un mode restreint pour un conducteur secondaire. Le passage de ce mode totalement opérationnel au mode restreint peut se faire à l'aide d'un code. Cette solution est limitée à un mode restreint.

### Présentation de l'invention

L'invention a pour but de permettre d'activer un mode de fonctionnement du véhicule choisi parmi plusieurs tout en assurant la sécurité du véhicule afin d'éviter que ce dernier ne soit volé.

On tend vers ce but grâce à un procédé de commande d'un état de fonctionnement d'un véhicule tel que l'état de fonctionnement, adoptant initialement un état verrouillé assurant l'immobilisation du véhicule, puisse être modifié pour adopter n'importe lequel des états de déverrouillage suivants :
- un état de déverrouillage total autorisant l'activation d'un mode de fonctionnement du véhicule, associé audit état de déverrouillage total, dépourvu de restriction,
- des états de déverrouillage partiel autorisant chacun l'activation d'un mode de fonctionnement associé audit état de déverrouillage partiel et permettant une mise en action restreinte du véhicule,
et en ce que le procédé de commande comporte :
- une étape de réception d'une instruction de commande demandant l'activation d'un des modes de fonctionnement,
- une étape de modification de l'état de fonctionnement de sorte à le faire passer de l'état verrouillé à l'état de déverrouillage associé au mode de fonctionnement dont l'activation est demandée pour autoriser l'activation dudit mode de fonctionnement,
- une étape d'activation du mode de fonctionnement autorisé.

Un tel procédé de commande propose d'ajouter des états de déverrouillage partiel permettant d'activer des modes de fonctionnement chacun associé à une mise en action restreinte du véhicule. Ceci permet de ne pas activer toutes les fonctions du véhicule afin d'en limiter les possibilités de vol. Grâce à cela, il est envisageable d'activer à distance l'un des modes de fonctionnement associé à l'un des états de déverrouillage partiel sans avoir à surveiller le véhicule.

Le procédé de commande peut aussi comporter une ou plusieurs des caractéristiques suivantes :
- l'étape de modification de l'état de fonctionnement comporte, après réception de l'instruction de commande : une étape d'émission d'une clé chiffrée identifiant le mode de fonctionnement dont l'activation est demandée, ladite clé chiffrée étant émise par un premier calculateur du véhicule à au moins un deuxième calculateur du véhicule ; une étape de réception de la clé chiffrée par ledit deuxième calculateur d'où il résulte le passage du deuxième calculateur de l'état verrouillé à l'état de déverrouillage associé au mode de fonctionnement dont l'activation est demandée pour autoriser ledit deuxième calculateur à fournir au moins une prestation participant à la mise en oeuvre du mode de fonctionnement identifié par la clé chiffrée reçue ;
- le procédé de commande comporte une étape de vérification d'une condition relative à la demande d'activation de l'un des modes de fonctionnement, la vérification de la condition provoquant la mise en oeuvre de l'étape de modification ;
- l'un des modes de fonctionnement associé à l'un des états de déverrouillage partiel assure, lorsque ce mode de fonctionnement est activé, une fonction de stationnement autonome du véhicule de telle sorte que la mise en action restreinte du véhicule autorise un déplacement du véhicule tout en interdisant au véhicule de franchir un seuil de vitesse ;
- l'un des modes de fonctionnement associé à l'un des états de déverrouillage partiel assure, lorsque ce mode de fonctionnement est activé, une fonction de pré-conditionnement thermique du véhicule de telle sorte que la mise en action restreinte du véhicule autorise la mise en oeuvre de cette fonction de pré-conditionnement thermique tant que la vitesse de déplacement du véhicule est nulle ;
- le procédé de commande comporte une étape d'émission de l'instruction de commande par un dispositif de commande à distance, ladite instruction de commande demandant d'activer l'un des modes de fonctionnement associé à l'un des états de déverrouillage partiel ;
- le procédé de commande comporte une étape d'émission de l'instruction de commande telle que l'instruction de commande émise demande l'activation du mode de fonctionnement associé à l'état de déverrouillage total, et l'étape de modification de l'état de fonctionnement fait passer l'état de fonctionnement de l'état verrouillé à l'état de déverrouillage total seulement si un dispositif d'identification est présent dans l'habitacle du véhicule ;
- chaque mise en action restreinte du véhicule correspond à activer tout ou partie d'une chaîne de traction du véhicule destinée à mettre en mouvement ledit véhicule tout en limitant le fonctionnement de cette chaîne de traction.

L'invention est aussi relative à un dispositif d'immobilisation pour véhicule, le dispositif d'immobilisation comportant des moyens pour l'exécution des étapes du procédé de commande tel que décrit.

L'invention est aussi relative à un véhicule comportant un dispositif d'immobilisation tel que décrit.

D'autres avantages et caractéristiques pourront ressortir clairement de la description qui va suivre.

### Brève description des figures

L'invention sera mieux comprise à la lecture de la description qui va suivre, donnée uniquement à titre d'exemple non limitatif et faite en se référant aux figures annexées listées ci-dessous.
[Fig. 1] La figure 1 représente des étapes d'un mode de réalisation selon l'invention d'un procédé de commande d'un état de fonctionnement d'un véhicule.
[Fig. 2] La figure 2 représente un dispositif d'immobilisation intégré à un véhicule automobile dans lequel est placé un dispositif d'identification mains-libre du véhicule.
[Fig. 3] La figure 3 représente le dispositif d'immobilisation intégré au véhicule automobile et associé à un dispositif de commande à distance.
[Fig. 4] La figure 4 représente différents états que l'état de fonctionnement peut adopter à partir d'un état verrouillé.
[Fig. 5] La figure 5 représente le dispositif d'immobilisation selon un mode de réalisation particulier de l'invention associé au dispositif de commande à distance.
[Fig. 6] La figure 6 représente les échanges entre deux calculateurs pour déverrouiller totalement le véhicule.
[Fig. 7] La figure 7 représente les échanges entre deux calculateurs pour déverrouiller partiellement le véhicule lorsque la situation est la suivante : activation d'un service connecté de « pré-conditionnement thermique » par le dispositif de commande à distance.
[Fig. 8] La figure 8 représente les échanges entre deux calculateurs pour déverrouiller partiellement le véhicule lorsque la situation est la suivante : activation d'un service connecté de « stationnement autonome » par le dispositif de commande à distance.
Dans ces figures, les mêmes références sont utilisées pour désigner les mêmes éléments.

### Description détaillée de l'invention

Dans la présente description, « ADC » sera utilisé pour désigner un dispositif anti-démarrage codé, « BSI » pour désigner un boîtier de servitude intelligent, « CMM » pour désigner un calculateur moteur multifonctions tel un calculateur de contrôle d'un moteur thermique ou un calculateur contrôle moteur, « CAN » pour désigner un bus système série ou « controller aéra network » en langue anglaise, « MCUx » pour désigner un calculateur de contrôle d'un moteur de la machine électrique avant si x vaut 1 ou arrière si x vaut 2 ou « machine control unit » en langue anglaise, « TCU » pour désigner un calculateur de contrôle de boîte de vitesse ou « traction control unit » en langue anglaise, et « IML » pour désigner un dispositif d'identification mains-libres.

Dans la présente description, le véhicule 100 est notamment un véhicule automobile.

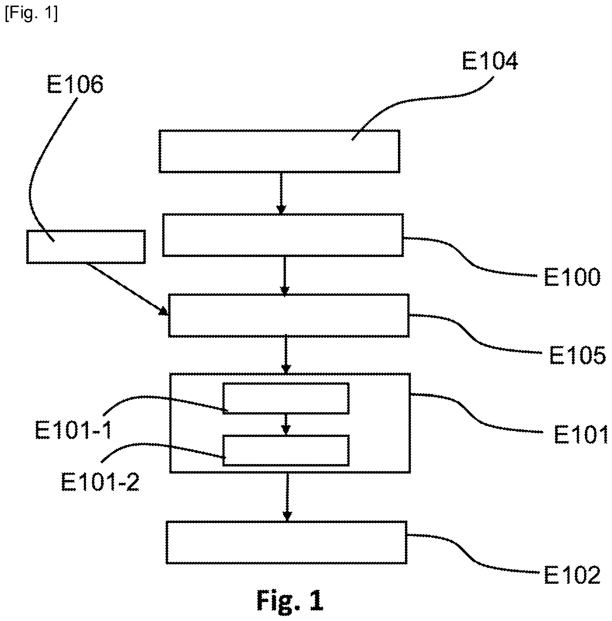

L'invention est relative à un procédé de commande d'un état de fonctionnement d'un véhicule 100 par exemple tel qu'illustré en figures 1 à 4. L'état de fonctionnement est choisi parmi un état E0 verrouillé assurant l'immobilisation du véhicule 100 et des états de E1, E2, E3 déverrouillage. Plus particulièrement, le procédé de commande est tel que l'état de fonctionnement, adoptant initialement l'état E0 verrouillé assurant l'immobilisation du véhicule 100, puisse être modifié pour adopter n'importe lequel des états E1, E2, E3 de déverrouillage, notamment cette modification est dépendante d'une instruction de commande telle qu'elle sera décrite ci-après. Les états E1, E2, E3 de déverrouillage sont les suivants, c'est-à-dire qu'ils sont choisis parmi : un état E1 de déverrouillage total, aussi appelé premier état de déverrouillage, autorisant l'activation d'un mode de fonctionnement du véhicule 100 dépourvu de restriction, ce mode de fonctionnement étant associé à l'état E1 de déverrouillage total ; des états E2, E3 de déverrouillage partiel, aussi appelés deuxièmes états, autorisant chacun l'activation d'un mode de fonctionnement associé audit état de déverrouillage partiel et permettant une mise en action restreinte du véhicule 100 pour assurer une fonction liée audit mode de fonctionnement. Alors que l'état de fonctionnement est l'état E0 verrouillé, le procédé de commande comporte une étape E100 de réception d'une instruction de commande demandant l'activation d'un des modes de fonctionnement (ces modes de fonctionnement étant ceux associés respectivement aux états E1, E2, E3 de déverrouillage), et une étape E101 de modification de l'état de fonctionnement de sorte à faire passer cet état de fonctionnement de l'état E0 verrouillé à l'état E1, E2, E3 de déverrouillage associé au mode de fonctionnement dont l'activation est demandée pour autoriser l'activation de ce mode de fonctionnement dont l'activation est demandée. Bien entendu, après l'étape E101 de modification, le procédé de commande peut comporter une étape E102 d'activation du mode de fonctionnement autorisé, c'est-à-dire celui dont l'activation a été demandée par l'instruction de commande et dont la mise en oeuvre est alors autorisée par l'état de fonctionnement du véhicule 100 alors placé dans l'état E1, E2, E3 de déverrouillage associé à ce mode de fonctionnement autorisé.

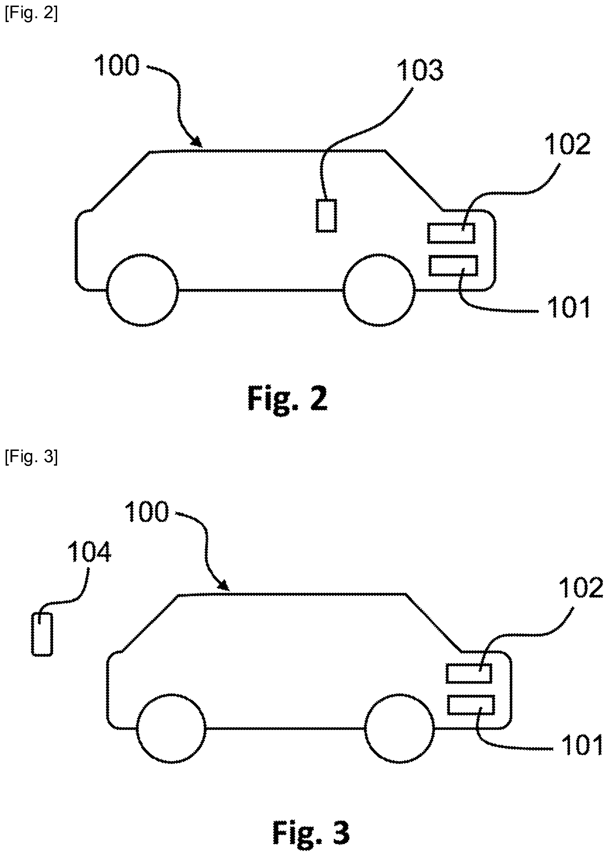

Ainsi, la présente invention propose d'ajouter, en plus des classiques états verrouillé et de déverrouillage total, des états de déverrouillage, dits « partiels » permettant chacun de restreindre le fonctionnement du véhicule 100. De telles restrictions permettent notamment de limiter les risques de vols du véhicule 100 lorsque son moteur 102 (figures 2 et 3) destiné à participer au déplacement du véhicule 100 est mis en route après déverrouillage partiel, par exemple pour réaliser une fonction particulière du mode de fonctionnement correspondant alors qu'un IML 103 du véhicule 100 (clé, notamment sans fil, permettant le démarrage du véhicule sans restriction) n'est pas dans le véhicule 100.

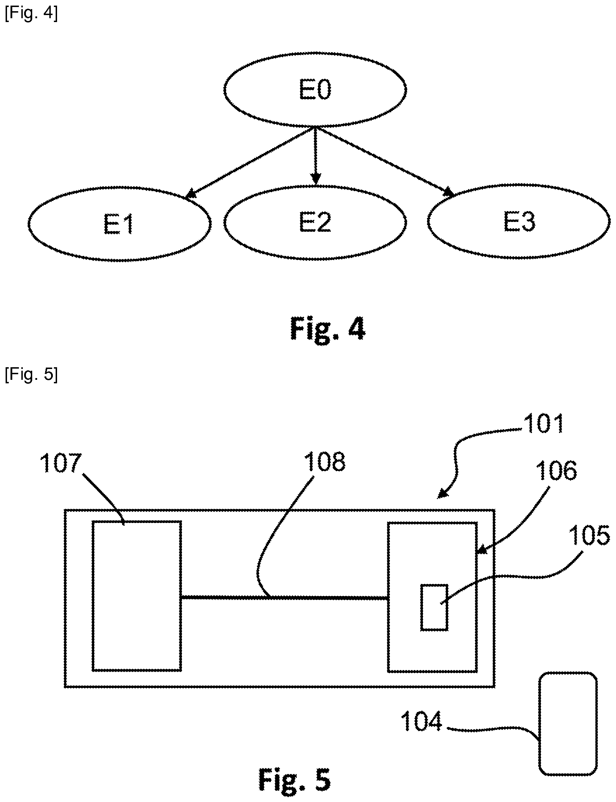

Dès lors, l'invention est aussi relative à un dispositif 101 d'immobilisation pour véhicule 100, notamment automobile. Le dispositif 101 d'immobilisation comporte des moyens pour l'exécution des étapes du procédé de commande tel que décrit dans la présente description. De tels moyens peuvent être des instructions de code de programme pour l'exécution du procédé de commande par un ordinateur pouvant comporter plusieurs calculateurs tels que décrits ci-après. Par exemple, le dispositif 101 d'immobilisation est un ADC. Un mode de réalisation particulier de ces moyens sera décrit plus en détail ci-après en relation avec la figure 5. En particulier, le dispositif d'immobilisation est configuré pour réceptionner l'instruction de commande, modifier l'état de fonctionnement, activer le mode de fonctionnement autorisé. Les avantages liés au procédé de commande s'appliquent au dispositif 101 d'immobilisation.

Le dispositif 101 d'immobilisation comporte/est placé dans l'état de fonctionnement qui peut varier de l'état E0 verrouillé à l'un quelconque des états E1, E2, E3 de déverrouillage. Autrement dit, le dispositif 101 d'immobilisation peut comporter une liste d'états comportant l'état E0 verrouillé et les états E1, E2, E3 de déverrouillage, l'état de fonctionnement peut adopter chacun des états de cette liste d'états. Il résulte de ce qui a été décrit ci-dessus que chaque état E1, E2, E3 de déverrouillage est associé à un mode de fonctionnement du véhicule 100 de telle sorte que, lorsque l'état de fonctionnement est dans l'état E1 de déverrouillage total, le mode de fonctionnement associé à l'état E1 de déverrouillage total permet une utilisation du véhicule 100 dépourvue de restriction, et que, pour chaque état E2, E3 de déverrouillage partiel, le mode de fonctionnement associé audit état E2, E3 de déverrouillage partiel permet, notamment lorsque l'état de fonctionnement est dans cet état de déverrouillage partiel, une mise en action restreinte du véhicule 100 pour assurer la fonction liée audit mode de fonctionnement.

Par « mise en action restreinte du véhicule », il est entendu que ce véhicule 100 n'est pas entièrement fonctionnel dans le sens où son fonctionnement est limité. Par exemple, la mise en action restreinte du véhicule 100 correspond à une mise en route du moteur 102 du véhicule 100, un tel moteur 102 avant ou arrière étant destiné à participer au déplacement du véhicule : il fait par exemple partie de la chaîne de traction du véhicule 100, mais tout en empêchant ou en limitant le déplacement du véhicule 100. La chaîne de traction peut aussi comporter la boîte de vitesse du véhicule 100. Ainsi, le dispositif 101 d'immobilisation et le procédé de commande correspondant permettent de limiter les risques de vol du véhicule 100. Autrement dit, chaque mise en action restreinte du véhicule 100 peut correspondre à activer tout ou partie de la chaîne de traction du véhicule 100 destinée à mettre en mouvement le véhicule 100 tout en limitant le fonctionnement de cette chaîne de traction.

Dès lors, les modes de fonctionnement sont notamment tous différents, ainsi que, le cas échéant pour les modes de fonctionnement associés aux états de déverrouillage partiel, les mises en action restreinte qu'ils permettent. Lorsqu'un mode de fonctionnement est activé, la mise en action du véhicule 100 correspondante, qu'elle soit dépourvue de restriction ou restreinte, est autorisée/mise en oeuvre.

Notamment, chaque mode de fonctionnement est associé à une « situation de vie du véhicule » définissant une condition particulière qui lorsqu'elle est vérifiée permet la mise en oeuvre du mode de fonctionnement.

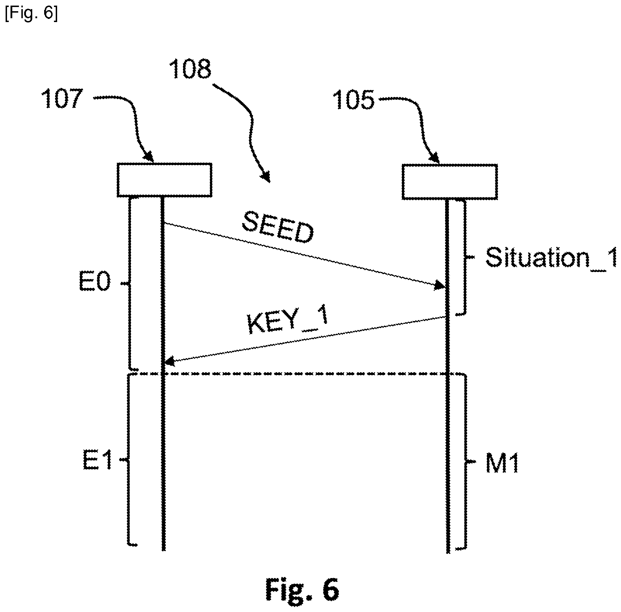

Par exemple, un premier mode de fonctionnement M1 (figure 6), associé à l'état E1 de déverrouillage total, est notamment mis en oeuvre lorsque la condition vérifiée est une authentification de l'IML 103 (figure 2) du véhicule 100 présent dans l'habitacle du véhicule 100 et que l'instruction de commande est une demande d'activation du démarrage véhicule 100 par le conducteur. Selon ce premier mode de fonctionnement M1, la situation de vie correspond à la présence de l'IML 103 dans l'habitacle associé à la demande du démarrage : il est considéré que la conduite du véhicule 100 sans restriction est autorisée. Ainsi, l'instruction de commande reçue (étape E100) peut demander l'activation de ce premier mode de fonctionnement M1 et l'étape E102 active ensuite ce premier mode de fonctionnement M1.

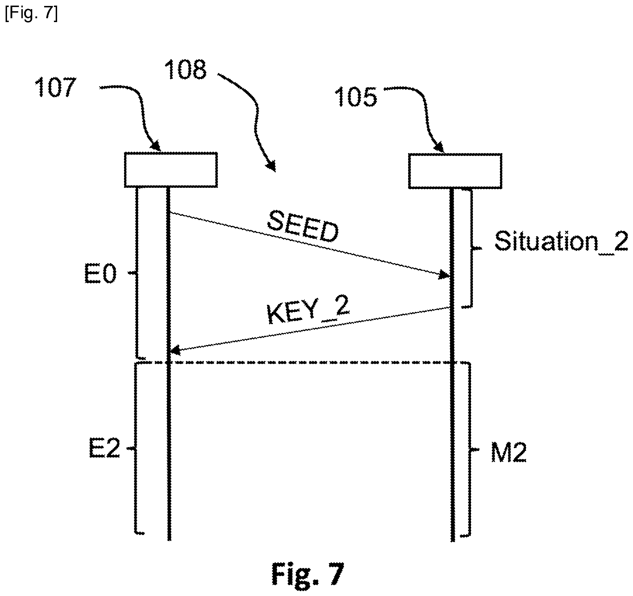

Par exemple, un deuxième mode de fonctionnement M2 (figure 7), associé à l'un des états E2 de déverrouillage partiel, n'est mis en oeuvre que si la condition vérifiée correspond à une demande d'activation d'une fonction de pré-conditionnement thermique du véhicule 100. Dans ce cas, on cherche à faire chauffer le véhicule 100, par exemple en mettant en route son moteur 102 tout en empêchant le déplacement du véhicule 100. Ce deuxième mode de fonctionnement M2 assure, lorsque ce deuxième mode de fonctionnement est activé (notamment par l'étape 102), la fonction de pré-conditionnement thermique du véhicule 100 de telle sorte que la mise en action restreinte du véhicule 100 (celle permise par ce deuxième mode de fonctionnement et donc par l'état E2 de déverrouillage partiel) autorise la mise en oeuvre de cette fonction de pré-conditionnement thermique tant que la vitesse de déplacement du véhicule 100 est nulle. Dans cet exemple, la mise en action retreinte peut permettre au moteur 102 de s'arrêter si le véhicule 100 vient à se déplacer (vitesse non nulle), ceci évitant son vol en cas d'introduction d'un voleur dans l'habitacle durant ce deuxième mode de fonctionnement. Ainsi, l'instruction de commande reçue (étape E100) peut demander l'activation de ce deuxième mode de fonctionnement M2 et l'étape E102 active ensuite ce deuxième mode de fonctionnement M2

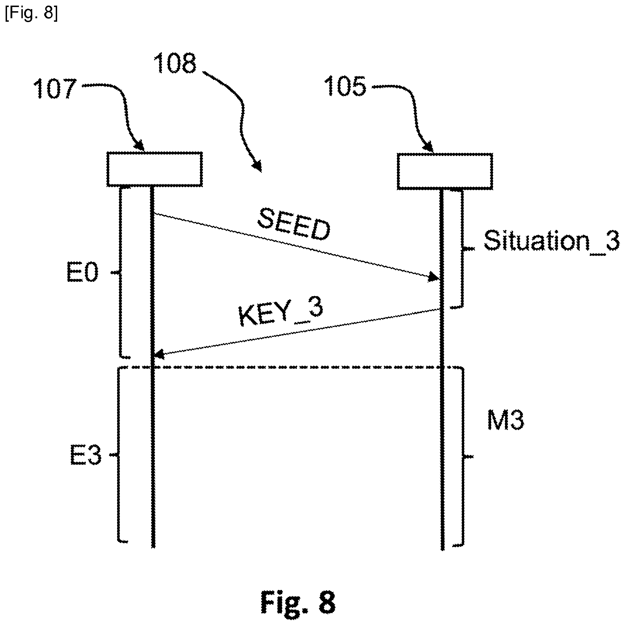

Par exemple, un troisième mode de fonctionnement M3 (figure 8), associé à l'un des états E3 de déverrouillage partiel, n'est mis en oeuvre que si la condition vérifiée correspond à une demande d'activation d'une fonction de stationnement autonome du véhicule 100 et la restriction associée peut empêcher le véhicule 100 de dépasser un seuil de vitesse par exemple de 30km/h. Ce troisième mode de fonctionnement assure, lorsque ce troisième mode de fonctionnement est activé (notamment par l'étape 102), une fonction de stationnement autonome du véhicule 100 de telle sorte que la mise en action restreinte du véhicule 100 (celle permise par ce troisième mode de fonctionnement et donc par l'état E3 de déverrouillage partiel) autorise un déplacement du véhicule 100 tout en interdisant au véhicule 100 de franchir le seuil de vitesse. Ceci permet, en cas d'introduction d'un voleur dans l'habitacle, d'éviter que ce dernier ne s'enfuit à toute vitesse avec le véhicule 100. Ainsi, l'instruction de commande reçue (étape E100) peut demander l'activation de ce troisième mode de fonctionnement M3 et l'étape E102 active ensuite ce troisième mode de fonctionnement M3.

De préférence, chaque mode de fonctionnement associé à l'un des états E2, E3 de déverrouillage partiel, est activable à distance par un dispositif 104 de commande à distance (figure 3) en utilisant, par exemple, la technologie de connectivité OTA (« Over The Air » en langue anglaise), notamment lorsque l'IML 103 n'est pas dans l'habitacle du véhicule 100. Chaque mode de fonctionnement activé par le dispositif 104 de commande à distance est aussi appelé « service connecté ». Autrement dit, le dispositif 101 d'immobilisation est configuré pour recevoir une instruction de commande du dispositif 104 de commande à distance provoquant le passage de l'état de fonctionnement adoptant l'état E0 verrouillé à l'un des états E2, E3 de déverrouillage partiel en vue de mettre en oeuvre le mode de fonctionnement associé, notamment lorsque l'IML 103 n'est pas présent dans l'habitacle du véhicule 100. Ainsi, le procédé de commande peut comporter une étape E104 d'émission (figure 1) de l'instruction de commande par le dispositif 104 de commande à distance, ladite instruction de commande demandant d'activer l'un des modes de fonctionnement associé à l'un des états E2, E3 de déverrouillage partiel. Ceci permet de modifier de manière adaptée l'état de fonctionnement de sorte que lorsque l'état de fonctionnement est passé à l'état E2 ou E3, l'étape 102 d'activation peut activer le mode de fonctionnement associé à cet état E2 ou E3. En particulier, lors de l'émission de l'instruction de commande par le dispositif 104 de commande à distance, ce dispositif 104 de commande à distance est éloigné du véhicule 100. Le dispositif 104 de commande à distance peut donc envoyer au dispositif 101 d'immobilisation, notamment à un calculateur 105 (figure 5) de ce dernier, autant d'instructions de commande qu'il existe d'états de déverrouillage partiel. Un tel dispositif 104 de commande à distance peut être un téléphone portable intelligent (« smartphone » en langue anglaise) muni d'une application adaptée. Le dispositif 104 de commande à distance, faisant alors partie d'un système de contrôle du véhicule 100 comportant le dispositif 101 d'immobilisation (figure 3) et ce dispositif 104 de commande à distance, est de préférence configuré pour envoyer l'instruction de commande au calculateur 105 (nommé premier calculateur 105 du véhicule ou du dispositif d'immobilisation par la suite) du dispositif 101 d'immobilisation de sorte à lui demander d'activer l'un des mode de fonctionnement associé à l'un des états E2, E3 de déverrouillage partiel. Ceci présente l'avantage d'assurer la mise en oeuvre du mode de fonctionnement souhaité sans avoir à être dans le véhicule 100 et sans avoir à surveiller le véhicule 100 puisque sa mise en action restreinte assurera la sécurité du véhicule 100 vis-à-vis d'éventuels voleurs. Notamment, l'IML 103 fait aussi partie du système de contrôle (figure 2).

Selon un cas particulier où l'on cherche à activer le mode de fonctionnement associé à l'état E1 de déverrouillage total du véhicule 100, le procédé de commande peut comporter l'étape E104 d'émission (figure 1) de l'instruction de commande telle que l'instruction de commande émise demande l'activation du mode de fonctionnement associé à l'état E1 de déverrouillage total, et l'étape E101 de modification de l'état fonctionnement fait passer l'état de fonctionnement de l'état E0 verrouillé à l'état E1 de déverrouillage total seulement si le dispositif 103 d'identification, notamment mains-libres, est présent dans l'habitacle du véhicule. Lorsque l'état de fonctionnement est passé à l'état E1, l'étape 102 d'activation peut activer le mode de fonctionnement associé à cet état E1. Ceci permet d'éviter le vol du véhicule 100 par un individu non muni de ce dispositif d'identification 103.

Selon un mode de réalisation particulier, il existe un besoin de développer une solution permettant une mise en oeuvre efficace du passage de l'état de fonctionnement de l'état E0 à l'un des états E1, E2, E3 de déverrouillage, et notamment de manière sécurisée. Pour répondre à ce besoin, l'étape E101 de modification de l'état de fonctionnement peut comporter (figure 1), après réception de l'instruction de commande notamment par le premier calculateur 105 du véhicule 100 : une étape E101-1 d'émission d'une clé chiffrée identifiant le mode de fonctionnement dont l'activation est demandée, ladite clé chiffrée étant émise par le premier calculateur 105 à au moins un deuxième calculateur 107 du véhicule 100 ; une étape E101-2 de réception de la clé chiffrée par ledit deuxième calculateur 107 d'où il résulte le passage du deuxième calculateur 107 de l'état E0 verrouillé à l'état E1, E2, E3 de déverrouillage associé au mode de fonctionnement dont l'activation est demandée pour autoriser ledit deuxième calculateur 107 à fournir au moins une prestation participant à la mise en oeuvre du mode de fonctionnement identifié par la clé chiffrée reçue. Ici, l'étape E102 d'activation du mode de fonctionnement autorisé permet d'activer le mode de fonctionnement identifié par la clé chiffrée, notamment après sa réception par le deuxième calculateur 107 qui l'utilise pour passer dans l'état de déverrouillage correspondant lui permettant de fournir la ou les prestations permettant la mise en oeuvre de ce mode de fonctionnement identifié par la clé chiffrée. Ainsi, le deuxième calculateur 107 est placé dans l'état de fonctionnement qui correspond à l'état E0 verrouillé avant réception de la clé chiffrée par le deuxième calculateur 107, ensuite le deuxième calculateur 107 traite la clé chiffrée reçue pour modifier l'état de fonctionnement en se plaçant dans l'état E1, E2, E3 de déverrouillage associé au mode de fonctionnement identifié par la clé chiffrée reçue. Lorsque plusieurs deuxièmes calculateurs 107 doivent fournir chacun une ou des prestations pour mettre en oeuvre le mode de fonctionnement identifié par la clé chiffrée, l'état de fonctionnement du véhicule, le cas échéant assimilé à l'état de fonctionnement du dispositif 101 d'immobilisation, passe à l'état de déverrouillage associé au mode de fonctionnement identifié lorsque chaque deuxième calculateur 107 a reçu une clé chiffrée correspondante.

Notamment, le procédé de commande comporte une étape E105 (figure 1) de vérification d'une condition relative à la demande d'activation de l'un des modes de fonctionnement, la vérification de la condition provoquant la mise en oeuvre de l'étape E101 de modification. Par exemple, cette condition à vérifier est la réception de l'instruction de commande, notamment par le premier calculateur 105, qui l'autorisera ensuite à envoyer la clé chiffrée adaptée au mode de fonctionnement à activer. Ceci permet de n'activer que lorsque cela est nécessaire le mode de fonctionnement correspondant.

Selon ce mode de réalisation particulier permettant une mise en oeuvre efficace du déverrouillage et notamment de manière sécurisée, le dispositif 101 d'immobilisation peut avantageusement comporter (figure 5) le premier calculateur 105, notamment ce premier calculateur 105 fait partie d'un BSI 106 du dispositif 101 d'immobilisation, et ledit au moins un deuxième calculateur 107. Le premier calculateur 105 peut alors être configuré pour envoyer, notamment après vérification de la condition c'est-à-dire par exemple la réception de l'instruction de commande, la clé chiffrée au deuxième calculateur 107, placé dans l'état de fonctionnement adoptant l'état E0 verrouillé. Cet envoi de la clé chiffrée est notamment réalisé sur un bus de données, ou un réseau, CAN 108. Par ailleurs, le deuxième calculateur 107 est configuré pour recevoir la clé chiffrée et passer à l'état E1, E2, E3 de déverrouillage associé au mode de fonctionnement identifié par ladite clé chiffrée reçue pour faire passer l'état de fonctionnement audit l'état de déverrouillage, ledit état E1, E2, E3 de déverrouillage permettant audit au moins un deuxième calculateur 107 d'assurer au moins une prestation requise pour la mise en oeuvre du mode fonctionnement identifié par la clé chiffrée. Ainsi, le deuxième calculateur 107 est configuré pour utiliser la clé chiffrée reçue afin de déterminer quel état E1, E2, E3 de déverrouillage doit être appliqué en tant qu'état de fonctionnement. La présence de plusieurs deuxièmes calculateurs 107 est possible lorsque plusieurs deuxièmes calculateurs 107 coopèrent pour mettre en oeuvre le mode de fonctionnement correspondant : dans ce cas, comme évoqué précédemment, chaque deuxième calculateur 107 va recevoir une clé chiffrée après que l'instruction de commande ait été reçue par le premier calculateur 105. Au final, lorsque tous les deuxièmes calculateurs 107, devant assurer une ou plusieurs prestations pour la mise en oeuvre du mode de fonctionnement dont l'activation est demandée, sont passés dans l'état E1, E2, E3 de déverrouillage correspondant, l'état de fonctionnement adopte l'état E1, E2, E3 de déverrouillage associé au mode de fonctionnement dont l'activation a été demandée. Dès lors, l'état E0, E1, E2, E3 du dispositif 101 d'immobilisation correspond à l'état du ou des deuxièmes calculateurs 107 concernés et donc in fine à l'état de fonctionnement. Selon l'invention, le premier calculateur 105 est configuré pour n'envoyer la clé chiffrée au deuxième calculateur 107 que si il a au préalable reçu l'instruction de commande et un nombre aléatoire envoyé par le deuxième calculateur 107, ce nombre aléatoire étant utilisé pour générer la clé chiffrée à envoyer du côté du premier calculateur 105 et pour déterminer en combinaison avec la clé chiffrée reçue l'état de déverrouillage à appliquer audit deuxième calculateur 107, ceci s'appliquant le cas échéant pour chacun des deuxièmes calculateurs 107 devant fournir des prestations pour mettre en oeuvre le mode de fonctionnement dont l'activation est demandée. Notamment, le deuxième calculateur 107 est configuré pour envoyer à plusieurs reprises le nombre aléatoire selon un intervalle temporel adapté afin de déclencher l'émission de la clé chiffrée peu de temps après réception de l'instruction de commande par le premier calculateur 105. Ainsi, le nombre aléatoire participe à améliorer la sécurité dans le cadre de la modification de l'état de fonctionnement.

Dans le cadre du procédé de commande, l'étape E101-1 d'émission de la clé chiffrée peut n'être mise en oeuvre qu'après une étape E106 de réception (figure 1), par le premier calculateur 105, d'un nombre aléatoire envoyé par ledit au moins un deuxième calculateur 107. Cette réception du nombre aléatoire peut alors faire partie de la condition à vérifier (étape E105) avant de mettre en oeuvre l'étape E101 de modification qui utilisera ensuite le nombre aléatoire de la manière décrite ci-dessus.

Le ou chaque deuxième calculateur 107 peut être choisi parmi : un CMM et dans ce cas l'état E0 verrouillé qu'adopte l'état de fonctionnement, et donc le CMM, se traduit par une absence de consigne émise par le CMM aux bobines d'allumage (moteur à essence) et/ou une absence de consigne émise par le CMM aux injecteurs (par exemple dans le cas d'un moteur à essence ou un moteur diesel) ; un MCU1 et dans ce cas l'état E0 verrouillé qu'adopte l'état de fonctionnement, et donc le MCU1, se traduit par une absence de pilotage en courant/tension du moteur de la machine électrique avant par ce MCU1 ; un MCU2 et dans ce cas l'état E0 verrouillé qu'adopte l'état de fonctionnement, et donc ce MCU2, se traduit par une absence de pilotage en courant/tension du moteur de la machine électrique arrière par ce MCU2 ; un TCU et dans ce cas l'état E0 verrouillé qu'adopte l'état de fonctionnement, et donc ce TCU, se traduit par l'impossibilité de quitter la fonction de parking (« park ») de la boîte automatique.

Ainsi, la mise en action restreinte du véhicule 100 autorisée lorsque l'état de fonctionnement passe de l'état E0 verrouillé à l'un des états E2, E3 de déverrouillage partiel peut consister à faire passer l'état de fonctionnement d'un ou plusieurs deuxièmes calculateurs 107 du véhicule 100 de l'état verrouillé à l'état de déverrouillage partiel concerné pour que ces deuxièmes calculateurs 107 fournissent une ou des prestations restreintes suivant l'état de déverrouillage concerné.

Il est à présent décrit un exemple particulier de fonctionnement du dispositif 101 d'immobilisation pour lequel le deuxième calculateur 107 est le CMM et le premier calculateur 105 est le calculateur du BSI. Dans un premier temps. Un nombre aléatoire « SEED » (figures 6 à 8), aussi appelé « graine aléatoire », généré par le CMM 107 est envoyé via le CAN 108 au calculateur 105 du BSI. Suivant la situation de vie dans laquelle se trouve le véhicule 100, c'est-à-dire : authentification d'un IML par le BSI et demande de démarrage du véhicule 100 (Situation_1 visible en figure 6), ou demande d'activation du service connecté « pré-conditionnement thermique » par le dispositif 104 de commande à distance (Situation_2 visible en figure 7), ou demande d'activation du service connecté « stationnement autonome » par le dispositif 104 de commande à distance (Situation_3 visible en figure 8), ou demande d'activation d'un autre service connecté par le dispositif 104 de commande à distance, le calculateur 105 du BSI va répondre au CMM 107, notamment après avoir reçu le nombre aléatoire émis par le CMM 107, par une clé chiffrée correspondant à cette situation de vie et générée en utilisant ce nombre aléatoire. Par exemple, le calculateur 105 du BSI répond au CMM 107 via le réseau CAN 108 par une clé chiffrée « KEY_1 » dans le cas de l'authentification de l'IML (présent dans l'habitacle du véhicule 100) par le BSI (figure 6) et d'une demande de démarrage du véhicule 100, par une clé chiffrée « KEY_2 » dans le cas de la demande d'activation du service connecté « pré-conditionnement thermique » (figure 7), par une clé chiffrée « KEY_3 » dans le cas de la demande d'activation du service connecté « stationnement autonome » (figure 8), ou par d'autres clés chiffrées dans le cas de demande d'activation d'autres services connectés par le dispositif 104 de commande à distance et qui requièrent chacun une mise en action restreinte du véhicule 100. Par exemple, si le CMM reçoit « KEY_1 » (figure 6), le CMM traite cette clé « KEY_1 » notamment en utilisant le nombre aléatoire pour assurer la sécurité de l'échange entre le calculateur du BSI et le CMM, il résulte de ce traitement de la clé « KEY_1 » que le CMM se déverrouille totalement (passage à l'état E1 de déverrouillage) et assure normalement ses fonctions sans aucune restriction (notamment le pilotage des bobines d'allumage et/ou l'envoi des consignes aux injecteurs), permettant ainsi la mise en oeuvre du premier mode de fonctionnement M1. Par exemple, si le CMM reçoit « KEY_2 » (figure 7), le CMM traite cette clé « KEY_2 » notamment en utilisant le nombre aléatoire pour assurer la sécurité de l'échange entre le calculateur du BSI et le CMM, et il résulte de ce traitement de la clé « KEY_2 » que le CMM se déverrouille partiellement (passage à l'état E2 de déverrouillage partiel) et assure ses fonctions de manière restreinte, permettant ainsi la mise en oeuvre du deuxième mode de fonctionnement M2. La liste des restrictions effectives lors de l'activation de ce déverrouillage partiel lié à « KEY_2 » dépend de la fonction, néanmoins on suppose que le pilotage des bobines d'allumage et/ou l'envoi des consignes aux injecteurs n'est possible que si la vitesse du véhicule 100 est nulle. En effet, le mode de fonctionnement « pré-conditionnement thermique » ne devrait pouvoir s'exécuter que lorsque le véhicule 100 est à l'arrêt. Par exemple, si le CMM reçoit « KEY_3 » (figure 8), le CMM traite cette clé « KEY_3 » notamment en utilisant le nombre aléatoire pour assurer la sécurité de l'échange entre le calculateur du BSI et le CMM, et il résulte de ce traitement de la clé « KEY_3 » que le CMM se déverrouille partiellement (passage en état E3) et assure ses fonctions de manière restreinte, permettant ainsi la mise en oeuvre du troisième mode de fonctionnement M3. La liste des restrictions effectives lors de l'activation de ce déverrouillage partiel lié à « KEY_3 » dépend de la fonction, néanmoins on suppose que le pilotage des bobines d'allumage et/ou l'envoi des consignes aux injecteurs ne permet pas au véhicule 100 de franchir un seuil de vitesse (par exemple un seuil de 30 km/h). En effet, le mode de fonctionnement "stationnement autonome" ne devrait pouvoir s'exécuter qu'avec le véhicule 100 roulant à faible vitesse. Par exemple, si le CMM reçoit une autre clé chiffrée, le CMM peut se déverrouiller partiellement et assure sa ou ses prestations liées au service connecté associé à cette clé de manière restreinte : la liste des restrictions effectives lors de l'activation de ce déverrouillage partiel est à définir suivant le service connecté associé à ce déverrouillage partiel.

De manière générale, on comprend qu'un rôle du premier calculateur 105 est recevoir l'instruction de commande pour ensuite permettre la modification de l'état de fonctionnement.

En remarque, selon l'exemple particulier ci-dessus et notamment de manière applicable à toutes les modes de réalisation de l'invention, il existe autant d'états de déverrouillage partiel que de services connectés supportés par le véhicule 100 et qui sont activés via le dispositif 104 de commande à distance. Ces services connectés que le véhicule 100 doit fournir requièrent une mise en action restreinte du véhicule 100 notamment tant qu'aucun IML n'est identifié par le BSI et qu'aucun service/mode de fonctionnement associé à un état de déverrouillage n'est actif. Tant que le BSI ne répond pas au CMM, ce dernier reste dans l'état de fonctionnement correspondant à l'état E0 verrouillé, ce qui se traduit par une absence de consigne aux bobines d'allumage et/ou une absence de consigne aux injecteurs. Grâce à la gestion des déverrouillages partiels décrits, la technologie OTA peut être utilisée pour permettre de déverrouiller partiellement le véhicule 100 tout en préservant le niveau de sécurité du procédé de commande ou du dispositif 101 d'immobilisation et donc d'éviter le vol du véhicule. Bien que l'exemple particulier ait été décrit en lien avec le CMM ce fonctionnement peut aussi s'appliquer au MCU1, au MCU2, ou au TCU.

Un avantage de l'exemple particulier donné ci-dessus est qu'il peut être mis en oeuvre en impactant les logiciels embarqués dans les premier et deuxième calculateurs déjà présents dans le véhicule. Il n'y a donc pas à modifier en profondeur l'architecture des véhicules existants pour implémenter cet exemple particulier de la présente invention. Ainsi, de manière générale, la mise en oeuvre de la présente invention n'impose pas de surcoûts importants.

Ainsi, on comprend que l'invention permet d'autoriser une mise en action restreinte du véhicule lors de l'exécution de services connectés. Pour ce faire, les états supplémentaires (en plus des états verrouillé/ de déverrouillage total classiques), correspondants aux états de déverrouillage partiel, sont produits par le dispositif 101 d'immobilisation. Le ou les calculateurs (CMM, TCU, ou MCUx) sont alors autorisés à fournir des prestations restreintes suivant l'état de déverrouillage partiel sélectionné actif. Chacun de ces nouveaux états de déverrouillage partiel correspond à un type de service connecté, ou mode de fonctionnement, que doit assurer le véhicule 100 de préférence lorsqu'une instruction de commande émise par le dispositif 104 de commande à distance est reçue par le véhicule 100, ce service connecté requérant une mise en action restreinte du véhicule.

Bien entendu, il est aussi compris que la présente invention s'applique à un véhicule 100, notamment automobile, comportant le dispositif 101 d'immobilisation tel que décrit (figures 2 et 3). Les avantages d'un tel véhicule 100 découlent de ceux décrits ci-avant en combinaison avec le procédé de commande et le dispositif 101 d'immobilisation.

Tout ce qui s'applique au procédé de commande peut s'appliquer au dispositif 101 d'immobilisation ou inversement.

La présente invention trouve une application industrielle dans le domaine des véhicules, notamment automobiles, dans sens où le dispositif 101 d'immobilisation peut être selon l'invention intégré dans le véhicule 100.

## Revendications

1. Procédé de commande d'un état de fonctionnement d'un véhicule (100), le procédé de commande est tel que l'état de fonctionnement, adoptant initialement un état (E0) verrouillé assurant l'immobilisation du véhicule (100), puisse être modifié pour adopter n'importe lequel des états (E1, E2, E3) de déverrouillage suivants :
- un état (E1) de déverrouillage total autorisant l'activation d'un mode de fonctionnement du véhicule (100), associé audit état (E1) de déverrouillage total, dépourvu de restriction,
- des états (E2, E3) de déverrouillage partiel autorisant chacun l'activation d'un mode de fonctionnement associé audit état de déverrouillage partiel et permettant une mise en action restreinte du véhicule (100),
et en ce que le procédé de commande comporte :
- une étape (E100) de réception d'une instruction de commande demandant l'activation d'un des modes de fonctionnement,
- une étape (E101) de modification de l'état de fonctionnement de sorte à le faire passer de l'état (E0) verrouillé à l'état (E1, E2, E3) de déverrouillage associé au mode de fonctionnement dont l'activation est demandée pour autoriser l'activation dudit mode de fonctionnement,
- une étape (E102) d'activation du mode de fonctionnement autorisé; et en ce que l'étape (E101) de modification de l'état de fonctionnement comporte, après réception de l'instruction de commande :
- une étape (E101-1) d'émission d'une clé chiffrée identifiant le mode de fonctionnement dont l'activation est demandée, ladite clé chiffrée étant émise par un premier calculateur (105) du véhicule (100) à au moins un deuxième calculateur (107) du véhicule (100),
- une étape (E101-2) de réception de la clé chiffrée par ledit deuxième calculateur (107) d'où il résulte le passage du deuxième calculateur (107) de l'état (E0) verrouillé à l'état (E1, E2, E3) de déverrouillage associé au mode de fonctionnement dont l'activation est demandée pour autoriser ledit deuxième calculateur (107) à fournir au moins une prestation participant à la mise en oeuvre du mode de fonctionnement identifié par la clé chiffrée reçue
et **caractérisé en ce qu'**il comporte une étape (E104) d'émission de l'instruction de commande par un dispositif (104) de commande à distance, ladite instruction de commande demandant d'activer l'un des modes de fonctionnement associé à l'un des états (E2, E3) de déverrouillage partiel,
le premier calculateur (105) étant configuré pour n'envoyer la clé chiffrée au deuxième calculateur (107) que si il a au préalable reçu l'instruction de commande et un nombre aléatoire envoyé par le deuxième calculateur (107), ce nombre aléatoire étant utilisé pour générer la clé chiffrée à envoyer du côté du premier calculateur (105) et pour déterminer en combinaison avec la clé chiffrée reçue l'état de déverrouillage à appliquer audit deuxième calculateur (107).

2. Procédé de commande selon la revendication 1, **caractérisé en ce qu'**il comporte une étape (E105) de vérification d'une condition relative à la demande d'activation de l'un des modes de fonctionnement, la vérification de la condition provoquant la mise en oeuvre de l'étape (E101) de modification.

3. Procédé de commande selon l'une quelconque des revendications précédentes, **caractérisé en ce que** l'un des modes de fonctionnement associé à l'un des états (E3) de déverrouillage partiel assure, lorsque ce mode de fonctionnement est activé, une fonction de stationnement autonome du véhicule (100) de telle sorte que la mise en action restreinte du véhicule (100) autorise un déplacement du véhicule (100) tout en interdisant au véhicule (100) de franchir un seuil de vitesse.

4. Procédé de commande selon l'une quelconque des revendications précédentes, **caractérisé en ce que** l'un des modes de fonctionnement associé à l'un des états (E2) de déverrouillage partiel assure, lorsque ce mode de fonctionnement est activé, une fonction de pré-conditionnement thermique du véhicule (100) de telle sorte que la mise en action restreinte du véhicule (100) autorise la mise en oeuvre de cette fonction de pré-conditionnement thermique tant que la vitesse de déplacement du véhicule (100) est nulle.

5. Procédé de commande selon l'une quelconque des revendications 1 à 4, **caractérisé en ce qu'**il comporte une étape (E104) d'émission de l'instruction de commande telle que l'instruction de commande émise demande l'activation du mode de fonctionnement associé à l'état (E1) de déverrouillage total, et **en ce que** l'étape (E101) de modification de l'état de fonctionnement fait passer l'état de fonctionnement de l'état (E0) verrouillé à l'état (E1) de déverrouillage total seulement si un dispositif (103) d'identification est présent dans l'habitacle du véhicule (100).

6. Procédé de commande selon l'une quelconque des revendications précédentes, **caractérisé en ce que** chaque mise en action restreinte du véhicule (100) correspond à activer tout ou partie d'une chaîne de traction du véhicule (100) destinée à mettre en mouvement ledit véhicule (100) tout en limitant le fonctionnement de cette chaîne de traction.

7. Dispositif (101) d'immobilisation pour véhicule (100), **caractérisé en ce qu'**il comporte des moyens pour l'exécution des étapes du procédé de commande selon l'une quelconque des revendications précédentes.

8. Véhicule (100), **caractérisé en ce qu'**il comporte un dispositif (101) d'immobilisation selon la revendication précédente.

## Patentansprüche

1. Verfahren zum Steuern eines Betriebszustands eines Fahrzeugs (100), wobei das Steuerverfahren derart ist, dass der Betriebszustand, der zunächst einen verriegelten Zustand (E0) annimmt, der eine Immobilisierung des Fahrzeugs (100) gewährleistet, geändert werden kann, um einen der folgenden Zustände anzunehmen: folgende Entriegelungszustände (E1, E2, E3):
- einen Zustand (E1) der vollständigen Entriegelung, der die Aktivierung eines Betriebsmodus des Fahrzeugs (100) erlaubt, der mit dem Zustand (E1) der vollständigen Entriegelung ohne Einschränkung verbunden ist,
- teilweise Entriegelungszustände (E2, E3), die jeweils die Aktivierung eines mit dem teilweisen Entriegelungszustand verbundenen Betriebsmodus autorisieren und eine eingeschränkte Aktivierung des Fahrzeugs (100) ermöglichen,
und dass die Bestellmethode Folgendes umfasst:
- einen Schritt (E100) des Empfangens einer Steueranweisung, die die Aktivierung einer der Betriebsarten anfordert,
- einen Schritt (E101) zum Ändern des Betriebszustands, um ihn vom verriegelten Zustand (E0) in den entriegelten Zustand (E1, E2, E3) zu überführen, der dem Betriebsmodus zugeordnet ist, dessen Aktivierung angefordert wird, um die Aktivierung des Betriebs zu genehmigen Modus,
- einen Schritt (E102) zum Aktivieren des autorisierten Betriebsmodus; und dass der Schritt (E101) des Änderns des Betriebszustands nach Erhalt der Steueranweisung Folgendes umfasst:
- einen Schritt (E101-1) zum Übertragen eines verschlüsselten Schlüssels, der den Betriebsmodus identifiziert, dessen Aktivierung angefordert wird, wobei der verschlüsselte Schlüssel von einem ersten Computer (105) des Fahrzeugs (100) an mindestens einen zweiten Computer (107) des Fahrzeugs (100) übertragen wird das Fahrzeug (100),
- einen Schritt (E101-2) des Empfangens des verschlüsselten Schlüssels durch den zweiten Computer (107), der zum Übergang des zweiten Computers (107) vom gesperrten Zustand (E0) in den Zustand (E1, E2, E3) führt Entsperren im Zusammenhang mit dem Betriebsmodus, dessen Aktivierung angefordert wird, um den zweiten Computer (107) zu autorisieren, mindestens einen Dienst bereitzustellen, der an der Implementierung des durch den empfangenen verschlüsselten Schlüssel identifizierten Betriebsmodus beteiligt ist
und **dadurch gekennzeichnet, dass** es einen Schritt (E104) zum Ausgeben des Steuerbefehls durch ein Fernsteuergerät (104) umfasst, wobei der Steuerbefehl die Aktivierung eines der Betriebsmodi anfordert, die einem der teilweisen Entriegelungszustände (E2, E3) zugeordnet sind.
wobei der erste Rechner (105) so konfiguriert ist, dass er den verschlüsselten Schlüssel nur dann an den zweiten Rechner (107) sendet, wenn dieser zuvor die Steueranweisung und eine vom zweiten Rechner (107) gesendete Zufallszahl erhalten hat, wobei diese Zufallszahl zur Generierung des verwendet wird verschlüsselter Schlüssel, der an den ersten Rechner (105) gesendet wird und in Kombination mit dem empfangenen verschlüsselten Schlüssel den Entsperrzustand bestimmt, der auf den zweiten Rechner (107) angewendet werden soll.

2. Steuerverfahren nach Anspruch 1, **dadurch gekennzeichnet, dass** es einen Schritt (E105) der Überprüfung einer Bedingung im Zusammenhang mit der Anforderung zur Aktivierung eines der Betriebsmodi und eine Überprüfung der Bedingung, die die Durchführung des Änderungsschritts (E101) verursacht, umfasst.

3. Steuerverfahren nach einem der vorhergehenden Ansprüche, **dadurch gekennzeichnet, dass** einer der einem der Teilentriegelungszustände (E3) zugeordneten Betriebsmodi bei Aktivierung dieses Betriebsmodus eine autonome Parkfunktion des Fahrzeugs (100) gewährleistet ), so dass die eingeschränkte Aktivierung des Fahrzeugs (100) die Bewegung des Fahrzeugs (100) zulässt und gleichzeitig verhindert, dass das Fahrzeug (100) eine Geschwindigkeitsschwelle überschreitet.

4. Steuerverfahren nach einem der vorhergehenden Ansprüche, **dadurch gekennzeichnet, dass** einer der einem der Teilentriegelungszustände (E2) zugeordneten Betriebsmodi bei Aktivierung dieses Betriebsmodus eine thermische Vorkonditionierung des Fahrzeugs gewährleistet (100), so dass die eingeschränkte Aktivierung des Fahrzeugs (100) die Umsetzung dieser thermischen Vorkonditionierungsfunktion zulässt, solange die Bewegungsgeschwindigkeit des Fahrzeugs (100) Null ist.

5. Steuerverfahren nach einem der Ansprüche 1 bis 4, **dadurch gekennzeichnet, dass** es einen Schritt (E104) zum Ausgeben des Steuerbefehls umfasst, so dass der ausgegebene Steuerbefehl die Aktivierung des Betriebsmodus anfordert, der dem Gesamtzustand (E1) zugeordnet ist Entriegeln, und dass der Schritt (E101) des Änderns des Betriebszustands den Betriebszustand vom verriegelten Zustand (E0) in den Zustand (E1) der vollständigen Entriegelung nur dann ändert, wenn eine Identifikationsvorrichtung (103) im Fahrgastraum vorhanden ist des Fahrzeugs (100).

6. Steuerverfahren nach einem der vorhergehenden Ansprüche, **dadurch gekennzeichnet, dass** jede eingeschränkte Aktivierung des Fahrzeugs (100) der Aktivierung der gesamten oder eines Teils einer Antriebskette des Fahrzeugs (100) entspricht, die dazu bestimmt ist, das Fahrzeug (100) in Bewegung zu setzen und schränkt gleichzeitig den Betrieb dieser Traktionskette ein.

7. Wegfahrsperre (101) für Fahrzeug (100), **dadurch gekennzeichnet, dass** sie Mittel zur Durchführung der Schritte des Steuerverfahrens nach einem der vorhergehenden Ansprüche umfasst.

8. Fahrzeug (100), **dadurch gekennzeichnet, dass** es eine Wegfahrsperre (101) nach dem vorhergehenden Anspruch umfasst.

## Claims

1. Method for controlling an operating state of a vehicle (100), the control method is such that the operating state, initially adopting a locked state (E0) ensuring immobilization of the vehicle (100), can be modified to adopt any of the following unlocking states (E1, E2, E3):
- a state (E1) of total unlocking authorizing the activation of an operating mode of the vehicle (100), associated with said state (E1) of total unlocking, without restriction,
- partial unlocking states (E2, E3) each authorizing the activation of an operating mode associated with said partial unlocking state and allowing restricted activation of the vehicle (100),
and in that the ordering method comprises:
- a step (E100) of receiving a control instruction requesting the activation of one of the operating modes,
- a step (E101) of modifying the operating state so as to move it from the locked state (E0) to the unlocking state (E1, E2, E3) associated with the operating mode whose activation is requested to authorize the activation of said operating mode,
- a step (E102) for activating the authorized operating mode; and in that the step (E101) of modifying the operating state comprises, after receipt of the control instruction:
- a step (E101-1) of transmitting an encrypted key identifying the operating mode whose activation is requested, said encrypted key being transmitted by a first computer (105) of the vehicle (100) to at least a second computer (107) of the vehicle (100),
- a step (E101-2) of receiving the encrypted key by said second computer (107) which results in the transition of the second computer (107) from the locked state (E0) to the state (E1, E2 , E3) of unlocking associated with the operating mode whose activation is requested to authorize said second computer (107) to provide at least one service participating in the implementation of the operating mode identified by the encrypted key received
and **characterized in that** it comprises a step (E104) of issuing the control instruction by a remote control device (104), said control instruction requesting activation of one of the operating modes associated with one of the partial unlocking states (E2, E3),
the first calculator (105) being configured to only send the encrypted key to the second calculator (107) if it has previously received the control instruction and a random number sent by the second calculator (107), this random number being used to generate the encrypted key to be sent to the side of the first calculator (105) and to determine in combination with the encrypted key received the unlocking state to be applied to said second calculator (107).

2. Control method according to claim 1, **characterized in that** it comprises a step (E105) of verifying a condition relating to the request for activation of one of the operating modes, verification of the condition causing the implementation of modification step (E101).

3. Control method according to any one of the preceding claims, **characterized in that** one of the operating modes associated with one of the partial unlocking states (E3) ensures, when this operating mode is activated, a function autonomous parking of the vehicle (100) such that the restricted activation of the vehicle (100) authorizes movement of the vehicle (100) while prohibiting the vehicle (100) from crossing a speed threshold.

4. Control method according to any one of the preceding claims, **characterized in that** one of the operating modes associated with one of the partial unlocking states (E2) ensures, when this operating mode is activated, a function thermal pre-conditioning of the vehicle (100) such that the restricted activation of the vehicle (100) authorizes the implementation of this thermal pre-conditioning function as long as the speed of movement of the vehicle (100) is zero .

5. Control method according to any one of claims 1 to 4, **characterized in that** it comprises a step (E104) of issuing the control instruction such that the issued control instruction requests activation of the operating mode associated with the state (E1) of total unlocking, and **in that** the step (E101) of modifying the operating state changes the operating state from the locked state (E0) to the The state (E1) of total unlocking only if an identification device (103) is present in the passenger compartment of the vehicle (100).

6. Control method according to any one of the preceding claims, **characterized in that** each restricted activation of the vehicle (100) corresponds to activating all or part of a traction chain of the vehicle (100) intended to set in motion said vehicle (100) while limiting the operation of this traction chain.

7. Immobilizer device (101) for vehicle (100), **characterized in that** it comprises means for carrying out the steps of the control method according to any one of the preceding claims.

8. Vehicle (100), **characterized in that** it comprises an immobilizer device (101) according to the preceding claim.
